# EUROPEAN PATENT SPECIFICATION

(11) **EP 1 772 059 B1**
(45) Date of publication and mention of the grant of the patent: **21.08.2013**
(21) Application number: 05743880.6
(22) Date of filing: 27.05.2005
(51) Int. Cl.: A23C 9/156, A23L 2/38

(54) **METHOD OF PRODUCING MILK DRINK**
VERFAHREN ZUR HERSTELLUNG EINES MILCHGETRÄNKS
MÉTHODE DE FABRICATION DE LAIT DE CONSOMMATION

(30) Priority: 28.05.2004 JP 2004160066
(43) Date of publication of application: 11.04.2007
(73) Proprietor: Meiji Co., Ltd., Tokyo (JP)
(72) Inventor: SUGAWARA, Takashi, Meiji Dairies Corporation, Kanagawa, 2500862 (JP); TAKEUCHI, Yukinari, c/o Meiji Dairies Corporation, Kanagawa, 2500862 (JP); KUBOTA, Yasushi; c/o Meiji Dairies Corporation, Kanagawa; 2500862 (JP)
(74) Representative: Isarpatent
(86) International application number: PCT/JP2005/009737
(87) International publication number: WO 2005/115158

(56) References cited:
- JP- - 10 295 341
- JP-A- 2001 078 665
- JP-A- 2004 201 601
- US-A1- 2003 015 101
- ISHIKAWA H.: '2Ea5 Kanetsu Sakkinji no Yozon Sanso Nodo ga Gyunyu no Fumi ni Ataeru Eikyo (2) - Dakki Gyuny ni Okeru Ioshu Seisei Yokusei Kiko no Kaimei' NIPPON SHOKUHIN KAGAKU KOGAKUKAI TAIKAI KOENSHU vol. 49TH, 2002, page 123, XP002994461

## Description

### Technical Field

The present invention relates to a method of producing a milk drink, and more specifically to a method of producing a milk drink having a similar flavor as of before heat treatment even after the heat treatment from raw materials comprising at least a milk protein-containing powder.

### Prior Art

Milk drinks are a kind of drink prepared from milk and milk products as a raw material, and are relatively rich in milk proteins and milk calcium. These meet well the health needs of the consumers, and hence a variety of milk drinks are recently provided.

Many of milk drinks are made mostly of milk and milk products such as raw milk, fermented milk and a skim milk powder, and are produced by adding sugars, calcium, vitamins and various flavors and heat sterilizing.

Among the raw materials, milk protein-containing powders such as a skim milk powder, which are prepared by removing water from milk and making into powders, are nutritious despite of its small volume and easy to handle. Therefore, it can be said that the powders highly suitable for producing a milk drink. However, a milk protein-containing powder has a problem of seriously worsened flavor because it is produced through a heat-drying step. The present inventors have focused their attention on sulfides as a cause of a worsened flavor, and measured an amount of generated sulfides in each step. Table 1 shows results. From the results, it has been confirmed that as going through steps more sulfides are generated and a skim milk powder contains more amount of the sulfides. However, it has been expected that judging from the amount of the sulfides generated in a skim milk powder, the sulfides almost reach to a saturation state. By the results, it is unlikely that sulfides are a cause of a worsened flavor of a milk drink made of a skim milk powder and the like.

**[Table 1]**

| | Solid content (%) | DMDS (peak area) |
|---|---|---|
| Skim milk (raw milk) | 9.3 | 3376 |
| After sterilization | 9.9 | 26364 |
| After concentration | 45.9 | 60250 |
| Skim milk powder | 96.4 | 94023 |

To solve the problem, a method of adding a flavorant and/or a sweetener to improve a flavor is conceivable, but the method cannot solve the problem completely. Particularly in so-called white drinks made with milk and milk products such as a skim milk powder and butter, it is difficult to mask a cooked odor.

JP-A-H05-260939 discloses a method for improving a taste of a milk drink by adding an edible oil such as SHIRASHIMEYU (a refined rape oil) into a conditioned liquor of skimmilk powder having a worsened flavor due to preservation, heat treatment or the like to transfer an off-flavor (see, Patent Reference1). However, the method has a problem of need of rigorous bacterial control, because the method is employed as a step after heat sterilization.

A method for obtaining a milk drink having a similar flavor as before heating by reducing oxygen dissolved in raw milk or an unheat-treated liquor partially made of raw milk and then heat treating to reduce sulfides generating during the heat treatment is disclosed, for example, in JP-A-H010-295341 (see, Patent Reference2) and JP-A-2001-78665 (see, Patent Reference 3) . However, those described a method using an unheated milk such as raw milk and fermented milk as a raw material, and it was not sure whether the method will also be applicable to the case using a milk derived protein-containing powder having a seriously worsened flavor due to heat drying as a raw material. In addition, as described above, it is thought that sulfides have been generated almost to the saturated state in a skim milk powder. Therefore, it is expected that any more sulfides does not generate when heating an untreated conditioned liquor made of a skim milk powder, or that a milk drink is difficult to be improved in its flavor even though the generation of sulfides in the milk drink is controlled in the heat treatment and the like.
Patent Reference1: JP-A-H05-260939
Patent Reference2: JP-A-H10-295341
Patent Reference3: JP-A-2001-78685

### Disclosure of the Invention

### Problem to be Solved by the Invention

Considering the problems of the conventional technique, the present invention has been made. The object of the present invention is to provide a milk drink, more specifically a so-called white drink, having a similar flavor as of a milk drink prepared from raw milk, skimmed concentrated milk and the like, even from a milk protein-containing powder (skim milk powder, etc.) having a seriously worsened flavor by preventing the milk drink from worsening in flavor due to heat treatment.

### Means for Solving the Problem

The present inventors have tried the above-described methods to accomplish the object, and surprisingly found that by heat treating an unheated conditioned liquor containing a milk protein powder in a dissolved oxygen-free state similarly as in heat sterilization of an unheated conditioned liquor containing raw milk, skim milk or fermented milk or the like, generation of sulfides in the heat treatment is controlled, and a milk drink having a good flavor and a reduced cooked odor can be produced, and thereby accomplished the present invention.

### Effects of the Invention

That is, since an unheated conditioned liquor containing a milk protein powder is substituted with an inert gas such as nitrogen gas to reduce dissolved oxygen to 8 ppm or less in the liquor and then heat treated, generation of sulfides is controlled and a milk drink of good flavor can be produced. Therefore, addition of various additives, in particular, raw materials and flavorants having masking or flavoring properties is eliminate, and a white drinkmeeting the consumer' s preference can be provided.

### Best Mode for Carrying Out the Invention

The method of the present invention produce a milk drink that does not change its flavor before and after heat treatment by heat treating a conditioned milk liquor prepared from raw materials comprising at least a milk protein-containing powder obtained by heat drying milk under the condition that a concentration of oxygen dissolved in the milk liquor is decreased to 8 ppm or less by substitution with an inert gas such as nitrogen gas to control generation of sulfides.

Sulfides are known to be a cooked odor, and it has been confirmed that an amount of generated dimethyl disulfide (DMDS), which is a typical sulfide, correlates with an organoleptical evaluation. Since heat-sterilized milk generally contains more amount of dimethyl disulfide due to heating and has a worsened flavor compared with those in which generation of dimethyl disulfide is controlled (see, Patent Reference 2), also in the present invention, an amount of generated sulfides is considered to be one of indicators of flavor of milk drink.

The milk drink of the present invention is prepared from raw materials comprising at least a milk protein-containing powder obtained by drying at least milk, and defers from those prepared from the other raw materials including milk such as raw milk and caw milk, fermented milk and skimmed concentrated milk as a main ingredient. According to the present invention, generation of a cooked odor can be controlled. Therefore the present invention is preferably applied to production of a so-called white drink made without raw materials capable of flavoring such as coffee, cocoa, fruit juice, vegetable juice, tea and green powdered tea or without flavorant, and further expected to be more effective (to produce more agreeable milk drink) by using together the raw materials capable of flavoring or the flavorant.

The milk protein-containing powder is a powder product obtained from milk as a raw material, including, for example, a whole milk powder, a skim milk powder, a partially skimmed milkpowder, acreampowder, awheypowder, aconcentratedmineral whey powder, a buttermilk powder, a milk protein concentrate, a whey protein concentrate, a whey protein isolate, milk casein, and whole and partial hydrolysate thereof. In the present invention, at least one or more of those milk protein-containing powders are used. To mask a cooked odor generating upon production of a powder, there are some cases that a raw powder material itself is added with a flavor, and a milk protein-containing powder flavored as such may be used as a raw material.

An amount of a milk protein-containing powder to a conditioned milk liquor is not specifically limited, and it is confirmed that even when a content thereof is not less than 8% by weight based on calculation as a nonfat milk solid, or not less than 3% by weight based on calculation as a milk protein, there is a high effect, in other words, generation of sulfides is controlled to a similar degree as that in heat sterilization of raw milk. By this, processed milk having a similar flavor as of caw milk and less cooked odor can be obtained from a skim milk powder, an unsalted butter or the like.

The conditioned milk liquor before heat treatment is prepared by dissolving the milk protein-containing powder described above in water, hot water, etc., and optionally added with sugars such as fructose, glucose, liquid sugar and sugar, anacidulant, a stabilizer, anemulsifier, vitamins, amino acids, minerals and functional food materials such as a soybean powder obtained by grinding soybeans and a so-called soy milk according to need. Particularly when using a bean protein such as a soybean powder and soymilk, milk drinks having good flavor are obtained. In addition, to produce a milk drink having more similar flavor as of raw milk, there are some cases in which milk products that not subjected to powder processing such as raw milk, fermented milk, butter, buttermilk, whey and concentrated milk are added to the milk drink. As the milk, not only caw milk, but also all of mammalian milk including horse, goat, sheep, buffalo, human and others can be used. When adding coffee, fruit juice and the like to the milk formulation, those are added with a stabilizer and/or an emulsifier according to need and mixed with the milk liquor, and the mixture is subjected to heat sterilization. Of course, coffee, fruit juice and the like may be pre-treated for sterilization by membrane treatment, heat treatment, etc., and added to the heat-sterilized conditioned milk liquor.

In the present invention, oxygen dissolved in a conditioned liquor before heat treatment (conditioned milk liquor) must be removed or reduced, but the method therefor is not specifically limited, and known methods can be applied. Examples of the method include a method of saturating with an inert gas by blowing the inert gas such as nitrogen gas and argon gas into a liquor to substitute oxygen dissolved in the liquor, a method of pre-substituting an air in a tank with nitrogen gas and a method of passing nitrogen gas through the upper part in a tank, and in some cases, pressuring (JP-A-H04-36178). Upon this, it is desirable that the whole oxygen dissolved in the liquor is removed, but a concentration of the dissolved oxygen may be not more than 8 ppm, and preferably not more than 5 ppm. When the concentration is more than 8 ppm, worsening of flavor is inevitable, and a product may have a powder milk's unique powdery taste and an oxidized flavor. Substitution by blowing an inert gas can be conducted within a tank and/or a line. Substitution is preferably conducted at 90°C or below, and preferably at 80 to 85°C or below.

Heat sterilization of the conditioned milk liquor after reducing oxygen dissolved therein is similarly conducted as general heat sterilization of rawmilk and the like. For example, those method are used such as a UHT method of sterilizing for 1 to 5 seconds at 120 to 150°C, an HTST method of sterilizing for 15 seconds or more at 72°C or higher, a method of sterilizing by keeping for 15 minutes or more at 75°C or higher, a method of sterilizing for 30 minutes at a temperature within the range of 62 to 65°C. Among those methods, the present invention is more effective in heat sterilization at high temperature.

### Example 1

Hereafter, the present invention is illustrated by the Examples, but not restricted by the Examples.

### <Experimental Example 1> (a milk drink using a skim milk powder and unsalted butter)

8.51 kg of skim milk powder, 4.16 kg of unsalted butter and 87.33 kg of water were mixed uniformly, and into the resultant mixture was dispersed nitrogen gas through a SPG membrane (Shirasu Porous Glass membrane: manufactured by SPG Technology Co., Ltd.) to adjust a concentration of dissolved oxygen to 5 ppm (nonfat milk solid: 8%, milk fat: 3.5%). The milk drink produced uniformly according to the formulation was subjected to heat sterilization for 3 second at 120°C (hereinafter, the condition of sterilization was same for all), and filled into a container to give a product.

### <Comparative Example 1> (a milk drink using a skim milk powder and unsalted butter)

8.51 kg of skim milk powder, 4.16 kg of unsalted butter and 87.33 kg of water were mixed uniformly to prepare a milk drink (nonfat milk solid: 8%, milk fat: 3.5%) . The milk drink produced uniformly according to the formulation was subjected to heat sterilization and filled into a container to give a product. A concentration of dissolved oxygen before heating was 11 ppm.

### <Experimental Example 2> (a milk drink using a whole milk powder)

11.99 kg of whole milk powder and 88.01 kg of water were mixed uniformly, and into the resultant mixture was dispersed nitrogen gas through a SPG membrane (same as above) to adjust a concentration of dissolved oxygen to 5 ppm (nonfat milk solid: 8%, milk fat: 3.5%). The milk drink produced uniformly according to the formulation was subj ected to heat sterilization and filled into a container to give a product.

### <Measurement of sulfides>

### Measurement of sulfides was conducted for dimethyl disulfide (DMDS) by a GC/MS method (head space method)

### (hereinafter, same for all). The results are listed in Table 2.

**[Table 2]**

| Sample | DMDS (peak area) | |
|---|---|---|
| | After heating | Before heating |
| Example 1 | 82000 | 61000 |
| Example 2 | 77000 | 99000 |
| Comparative Example 1 | 420000 | - |
| DMDS: dimethyl disulfide | | |

### <Experimental Example 3> (a milk drink using a skim milk powder and unsalted butter)

8.52 kg of skim milk powder, 1.64 kg of unsalted butter and 89.84 kg of water were mixed uniformly, and into the resultant mixture was dispersed nitrogen gas through a SPG membrane (same as above) to adjust a concentration of dissolved oxygen to 5 ppm (nonfat milk solid: 8%, milk fat: 1.5%). The milk drink produced uniformly according to the formulation was subjected to heat sterilization and filled into a container to give a product.

### <Comparative Example 2> (a milk drink using a skim milk powder and unsalted butter)

8.52 kg of skim milk powder, 1.64 kg of unsalted butter and 89.84 kg of water were mixed uniformly to prepare an unheated conditioned milk liquor (nonfat milk solid: 8%, milk fat: 1.5%). The milk drink produced uniformly according to the formulation was subjected to heat sterilization and filled into a container to give a product.

### <Measurement of sulfides>

For milk drinks of Experimental Example 3 and Comparative Example 2, sulfides were measured by the similar method as above. The results are listed in Table 3.

**[Table 3]**

| Sample | DMDS (peak area) | |
|---|---|---|
| | After heating | Before heating |
| Example 3 | 78000 | 36000 |
| Comparative Example 2 | 400000 | - |
| DMDS: dimethyl disulfide | | |

As obvious from the results, it was revealed that in milk drinks obtained in Experimental Examples 1, 2 and 3, generation of DMDS can be considerably controlled by adjusting dissolved oxygen to 5 ppm before heat sterilization, compared with respective Comparative Examples. In milk drinks of Experimental Examples 1 and 2, which were conditioned to have almost same composition as of caw milk, amounts of DMDS were similar level as of the case when heat sterilizing usual raw milk in the same condition (see, Example 1 of Patent Reference2) .

Next, organoleptical tests were performed by 10 professional panelists. The results are listed in Tables 4 and 5. An evaluation method is a grading method, grading 7 steps as: very good = +7, good = +6, slightly good = +5, ordinary = +4, slightly bad = +3, bad = +2 and very bad= +1. As shown in Table 4, both of Experimental Examples 1 and 2 received better evaluations than that of Comparative Example 1. Experimental Example 3 comprising less amount of butter than in Experimental Example 1 also received better evaluations than that of Comparative Example 2 (Table 5).

### [Table 4]

**Table 4**

| | Sample | Organoleptical test |
|---|---|---|
| A | Example 1 | ⊙ |
| B | Example 2 | ⊙ |
| C | Comparative Example 1 | - |

| | | |
|---|---|---|
| (cf.) organoleptical test (difference, comparing with C) | | |

×: Having a worsened flavor compared with C
Δ: Having a comparable flavor compared with C
○: Having a better flavor compared with C
⊙: Having a statistically significantly better flavor compared with C.

**[Table 5]**

| | Sample | Organoleptical test |
|---|---|---|
| A | Example 3 | ⊙ |
| B | Comparative Example 2 | - |

| | | |
|---|---|---|
| (cf.) organoleptical test (difference, comparing with B) | | |

×: Having a worsened flavor compared with B
Δ: Having a comparable flavor compared with B
○: Having a better flavor compared with B
⊙: Having a statistically significantly better flavor compared with B.

### Industrial Applicability

According to the method of the present invention, generation of sulfides can be controlled, and a milk drink having a good flavor can be provided even if using a milk protein-containing powder as a raw material. In the case of a so-called white drink using only raw materials derived from milk and milk products, an effect obtained by the present invention is very high, and the drink is pleasantly drinkable only having its natural sweetness and flavor without added a flavorant, sugars, etc. Therefore, processed milk,for example, having a similar flavor as of caw milk can be produced from a skim milk powder and the like.

## Claims

1. A method for producing a milk drink having a good flavor, comprising:
substituting oxygen dissolved in a conditioned milk liquor comprising at least a milk protein-containing powder obtained by heat drying milk as a raw material with an inert gas to reduce a concentration of the oxygen to 8 ppm or lower; and
heat treating the milk liquor.

2. The method according to claim 1, wherein generation of sulfides is controlled.

3. The method according to any of claim 1 or 2, wherein the milk protein-containing powder is one or more of those consisting of a whole milk powder, a skimmilk powder, a partially skimmedmilkpowder, acreampowder, awheypowder, a concentrated mineral whey powder, a buttermilk powder, a milk protein concentrate, a whey protein concentrate, a whey protein isolate and milk casein.

4. The method according to any of claims 1 to 3, wherein the oxygen dissolved in the liquor is reduced by substituting with nitrogen gas.

## Patentansprüche

1. Verfahren zur Herstellung eines Milchgetränks mit einem leckeren Geschmack, wobei das Verfahren Folgendes umfasst:
- Substituieren von Sauerstoff, der in einer konditionierten Milchflüssigkeit aufgelöst ist, die mindestens ein Milchprotein-haltiges Pulver, das durch Wärmetrocknung von Milch erhalten wurde, als einen Rohstoff enthält, durch ein Inertgas, um eine Konzentration des Sauerstoff auf 8 ppm oder weniger zu verringern; und
- Wärmebehandeln der Milchflüssigkeit.

2. Verfahren nach Anspruch 1, wobei das Erzeugen von Sulfiden kontrolliert wird.

3. Verfahren nach einem der Ansprüche 1 oder 2, wobei das Milchprotein-haltige Pulver eines oder mehrere von denen ist, die aus einem Vollmilchpulver, einem Magermilchpulver, einem Teil-Magermilchpulver, einem Sahnepulver, einem Molkepulver, einem konzentrierten mineralischen Molkepulver, einem Buttermilchpulver, einem Milchproteinkonzentrat, einem Molkeproteinkonzentrat, einem Molkeproteinisolat und Milchcasein bestehen.

4. Verfahren nach einem der Ansprüche 1 bis 3, wobei der
in der Flüssigkeit aufgelöste Sauerstoff durch Substituieren durch Stickstoffgas reduziert wird.

## Revendications

1. Procédé de production d'une boisson lactée ayant un bon goût, comprenant :
- la substitution de l'oxygène dissous dans un liquide de lait conditionné comprenant au moins une poudre contenant des protéines de lait obtenue par séchage à la chaleur du lait comme matière brute avec un gaz inerte pour réduire une concentration de l'oxygène à 8 ppm ou moins ; et
- le traitement à la chaleur du liquide lacté.

2. Procédé selon la revendication 1, dans lequel la production de sulfures est contrôlée.

3. Procédé selon l'une quelconque des revendications 1 ou 2, dans lequel la poudre contenant des protéines de lait est une ou plusieurs de celles constituées par une poudre de lait entier, une poudre de lait écrémé, une poudre de lait partiellement écrémé, une poudre de crème, une poudre de lactosérum, une poudre de lactosérum minéral concentré, une poudre de babeurre, un concentré de protéines de lait, un concentré de protéines de lactosérum, un isolat de protéines de lactosérum et la caséine du lait.

4. Procédé selon l'une quelconque des revendications 1 à 3, dans lequel l'oxygène dissous dans le liquide est réduit par substitution avec de l'azote gazeux.
